# FASCICULE DE BREVET EUROPEEN

(11) **EP 1 460 385 B1**
(45) Date de publication et mention de la délivrance du brevet: **07.06.2006**
(21) Numéro de dépôt: 04290545.5
(22) Date de dépôt: 01.03.2004
(51) Int. Cl.: G01C 23/00, B64D 43/02

(54) **Procédé et indicateur pour afficher des informations illustrant des marges de vitesse sur un aéronef**
Verfahren und Vorrichtung zum Anzeigen von Geschwindigkeitsbereichen in einem Luftfahrzeug
Method of and device for displaying information representing speed ranges on an aircraft

(30) Priorité: 20.03.2003 FR 0303413
(43) Date de publication de la demande: 22.09.2004
(73) Titulaire: AIRBUS France, 31060 Toulouse (FR)
(72) Inventeur: Vialleton, Pascal, 31300 Toulouse (FR); Delporte, Martin, 31170 Tournefeuille (FR); Reinmuth, Jean-Christophe, 31700 Blagnac (FR); Rosay, Jacques, 31000 Toulouse (FR)
(74) Mandataire: Hauer, Bernard

(56) Documents cités:
- EP-A- 1 008 921
- WO-A-00/65423
- US-A- 4 149 148

## Description

La présente invention concerne un procédé et un indicateur pour afficher des informations illustrant des marges de vitesse sur un aéronef.

On sait qu'un indicateur qui affiche des marges de vitesse sur un écran de visualisation, en particulier sur un écran de visualisation de paramètres primaires de vol (vitesse, altitude, assiette, ...) de type PFD ("Primary Flight Display"), utilise généralement, notamment pour la vitesse, les mesures réalisées par au moins un capteur de pression. Aussi, lorsqu'un tel capteur de pression tombe en panne, au moins l'information de marge de vitesse n'est plus disponible et ne peut plus être affichée. Le pilote n'a alors plus accès à cette information importante, ce qui peut avoir des conséquences très préjudiciables pour le pilotage de l'aéronef, avec notamment un risque de vol dans un domaine de vitesses non autorisées.

La présente invention a pour objet de remédier à ces inconvénients. Elle concerne un procédé pour afficher des informations illustrant des marges de vitesse sur un aéronef, sans utiliser les mesures d'un capteur de pression. On connait déjà un tel procédé et dispositif de WO 00/65423.

A cet effet, selon l'invention, ledit procédé est défini par revendication 1.

Ainsi, grâce à l'invention, avec uniquement une mesure d'incidence et une échelle longitudinale appropriée, on est en mesure de présenter une information remplaçant la vitesse, se pilotant comme une vitesse et permettant d'assurer la sécurité de l'aéronef sans connaissance de pilotage autre que celle d'un pilotage de vitesse.

Dans le cadre de la présente invention, on entend par configuration aérodynamique de l'aéronef, la position des becs et des volets de la voilure de l'aéronef.

De façon avantageuse, dans une étape préliminaire, on définit une pluralité d'échelles longitudinales représentatives, respectivement, de différentes configurations aérodynamiques de l'aéronef, et à l'étape b) :
- on détermine la configuration aérodynamique actuelle de l'aéronef ; et
- on sélectionne, parmi ladite pluralité d'échelles longitudinales, celle qui est représentative de ladite configuration aérodynamique actuelle de l'aéronef.

Par conséquent, pour définir chacune desdites échelles longitudinales, on détermine simplement lesdites première à quatrième limites de vol correspondantes, qui sont caractéristiques d'une configuration aérodynamique (becs/volets) de l'aéronef et qui permettent de constituer l'échelle longitudinale correspondante.

Par ailleurs, avantageusement, on présente ladite échelle longitudinale verticalement sur ledit écran de visualisation, et elle est formée de manière à comporter les valeurs d'angle d'incidence élevées vers le bas et les valeurs d'angles d'incidence faibles vers le haut.

Ainsi, comme l'incidence et la vitesse d'un aéronef varient en sens opposés, en mettant les incidences élevées en bas et les incidences faibles en haut, on permet au pilote de retrouver le comportement d'une échelle usuelle (de marge de vitesse) qu'il connaît, de sorte que, lorsqu'il accélère, sa mesure de vitesse augmente, et inversement.

De plus, on choisit la taille de la visualisation (de l'échelle longitudinale) de manière à se rapprocher, en terme de dynamique, du comportement de la vitesse. On peut choisir, par exemple, que 1 cm correspond à 2° d'incidence.

Ainsi, la taille et le mode de variation (sens, vitesse) de l'affichage sont adaptés de manière à se rapprocher du comportement usuel d'un affichage de vitesse.

Par ailleurs, avantageusement, à l'étape a) on filtre l'incidence actuelle, au moins lorsque l'une des deux conditions suivantes est vérifiée : l'air extérieur est calme et l'air extérieur est turbulent.

Dans un mode de réalisation préféré de l'invention, on présente ladite échelle et ledit signe caractéristique sur l'écran de visualisation, uniquement lorsqu'un afficheur principal est défaillant, en particulier un afficheur usuel utilisant les mesures d'au moins un capteur de pression. Ainsi, la présente invention permet de remédier aux inconvénients précités qui apparaissent lors de la panne d'un capteur de pression en ce qui concerne l'affichage des marges de vitesse.

A cet effet, de préférence :
α) on surveille en permanence au moins un capteur de pression de l'aéronef, dont les mesures sont utilisées par ledit afficheur principal ; et
β) lorsque l'on détecte une panne dudit capteur de pression, on en déduit que ledit afficheur principal est défaillant.

En outre, avantageusement, on présente ladite échelle et ledit signe caractéristique sur l'écran de visualisation, uniquement lorsque l'aéronef est en vol.

Dans un mode de réalisation particulier :
- lesdites zones de l'échelle longitudinale sont différenciées à l'aide de couleurs différentes ; et/ou
- ledit signe caractéristique est un trait qui est orthogonal à la direction longitudinale de l'échelle et qui est prévu sur ladite échelle.

Par ailleurs, pour bien mettre en évidence les domaines de vol interdits, avantageusement, on prévoit, sur l'échelle longitudinale :
- dans la zone relative audit premier domaine de vol interdit, une première indication écrite prévenant d'une vitesse faible de l'aéronef ; et
- dans la zone relative audit second domaine de vol interdit, une seconde indication écrite prévenant d'une vitesse élevée de l'aéronef.

La présente invention concerne également un indicateur de pilotage pour aéronef selon la revendication 11.

De façon avantageuse, ladite unité centrale filtre l'incidence actuelle déterminée par ledit premier moyen, au moins lorsque l'air extérieur est calme ou turbulent.

En outre, avantageusement, ledit indicateur de pilotage comporte de plus :
- un second moyen pour déterminer la configuration aérodynamique actuelle de l'aéronef ; et/ou
- un moyen de détection qui est susceptible de détecter la défaillance d'un indicateur principal, et lesdits moyens d'affichage présentent ladite échelle et ledit signe caractéristique sur l'écran de visualisation, uniquement lorsque la défaillance dudit indicateur principal est détectée par ledit moyen de détection.

Par ailleurs, la présente invention concerne également un dispositif d'indication, destiné à fournir des marges de vitesse, ledit dispositif d'indication comportant un indicateur principal susceptible de présenter des marges de vitesse sur un écran de visualisation.

Ce dispositif d'indication est remarquable, selon l'invention, en ce qu'il comporte, de plus, un indicateur auxiliaire destiné à présenter des informations de marges de vitesse sur un écran de visualisation, lorsque ledit indicateur principal est défaillant, et en ce que ledit indicateur auxiliaire correspond à l'indicateur de pilotage précité.

Les figures du dessin annexé feront bien comprendre comment l'invention peut être réalisée. Sur ces figures, des références identiques désignent des éléments semblables.

La figure 1 est le schéma synoptique d'un indicateur de pilotage conforme à l'invention.

La figure 2 montre schématiquement les informations qui sont présentées par un indicateur de pilotage conforme à l'invention sur un écran de visualisation.

La figure 3 est le schéma synoptique d'un dispositif d'indication conforme à l'invention, comportant un indicateur de pilotage tel que celui représenté sur la figure 1.

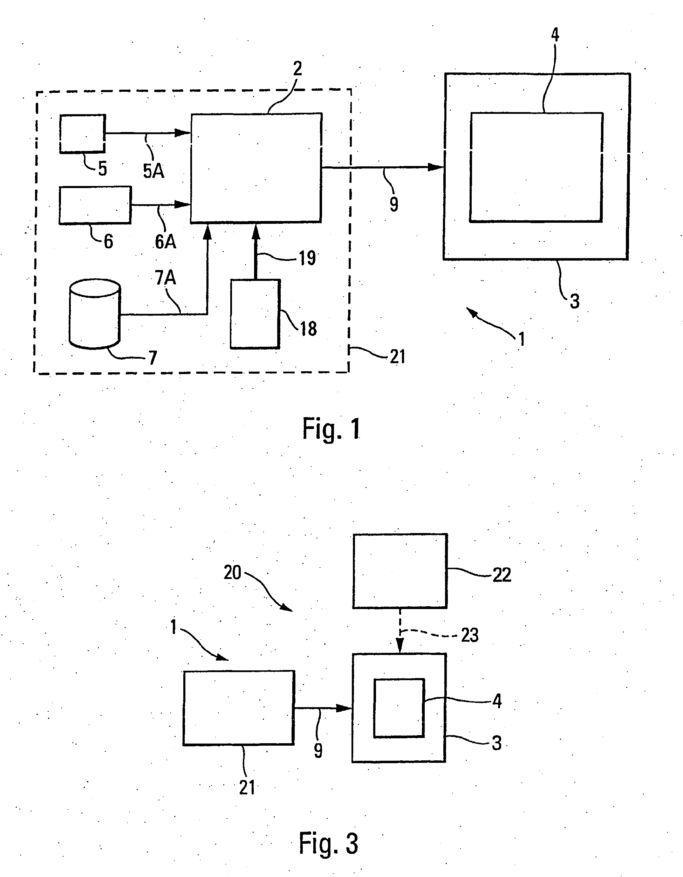

L'indicateur de pilotage 1 conforme à l'invention et représenté schématiquement sur la figure 1, est destiné à fournir des informations illustrant des marges de vitesse sur un aéronef, en particulier un avion de transport civil. Cet indicateur de pilotage 1 est du type comportant une unité centrale 2 et des moyens d'affichage 3 qui sont munis d'un écran de visualisation 4, en particulier un écran usuel de visualisation de paramètres primaires de vol (vitesse, altitude, assiette, ...) de type PFD ("Primary Flight Display").

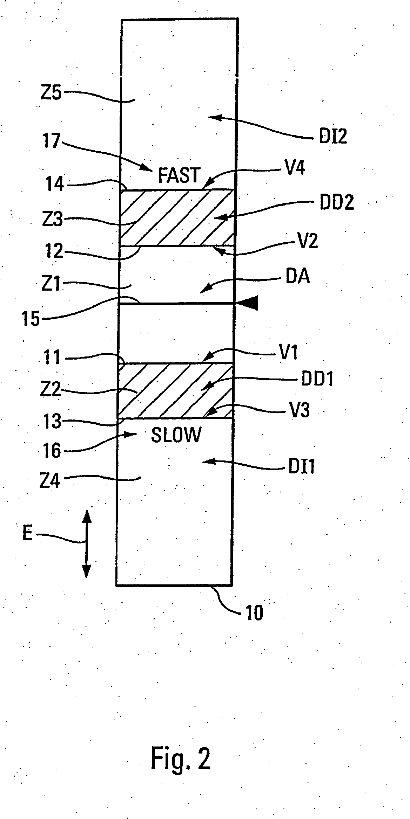

Selon l'invention, ledit indicateur de pilotage 1 comporte, de plus, un moyen 5 usuel pour déterminer l'incidence actuelle α de l'aéronef et au moins une base de données 7 qui comprend une pluralité d'échelles longitudinales 10 qui dépendent de la configuration aérodynamique de l'aéronef et qui comportent plusieurs zones différenciées Z1 à Z5 :
- représentées sur la figure 2 ;
- limitées respectivement par des traits 11 à 14 (représentant respectivement des limites de vol V1 à V4 précisées ci-dessous) ;
- exprimées en angles d'incidence ; et
- correspondant respectivement à un domaine de vol autorisé DA, des premier et second domaines de vol déconseillés DD1, DD2 et des premier et second domaines de vol interdits DI1, DI2.

De plus, selon l'invention :
- ladite unité centrale 2, qui est reliée par des liaisons 5A et 7A respectivement au moyen 5 et à la base de données 7, sélectionne, parmi ladite pluralité d'échelles longitudinales, celle qui est représentative de la configuration aérodynamique actuelle de l'aéronef ; et
- lesdits moyens d'affichage 3 reçoivent des informations de ladite unité centrale 2 par une liaison 9 et présentent, sur ledit écran de visualisation 4, ladite échelle longitudinale 10 sélectionnée, qui est mobile longitudinalement, comme illustré par une double flèche E, en étant susceptible de défiler sur ledit écran de visualisation 4, et dont la position sur ledit écran de visualisation 4 est définie en fonction de l'incidence actuelle α de l'aéronef, qui est illustrée par un signe caractéristique 15 qui est fixe sur ledit écran de visualisation 4 au niveau de ladite échelle longitudinale 10, ladite échelle longitudinale mobile 10 défilant donc par rapport audit signe caractéristique 15 en fonction de l'incidence actuelle α de l'aéronef.

Dans un mode de réalisation particulier, l'indicateur de pilotage 1 comporte, de plus, un moyen 6 pour déterminer la configuration aérodynamique actuelle de l'aéronef, et ladite unité centrale 2 qui est reliée par une liaison 6A à ce moyen 6, sélectionne, parmi ladite pluralité d'échelles longitudinales, celle qui est représentative de la configuration aérodynamique actuelle, déterminée par ledit moyen 6.

Ainsi, grâce à l'invention, avec uniquement une mesure d'incidence α et une échelle longitudinale 10 appropriée, l'indicateur de pilotage 1 est en mesure de présenter une information remplaçant la vitesse, se pilotant comme une vitesse et permettant d'assurer la sécurité de l'aéronef sans connaissance de pilotage autre que celle d'un pilotage de vitesse.

Par ailleurs, avantageusement, on présente ladite échelle longitudinale 10 verticalement sur ledit écran de visualisation 4, et elle est formée de manière à comporter les valeurs d'angle d'incidence élevées vers le bas et les valeurs d'angles d'incidence faibles vers le haut.

Ainsi, comme l'incidence et la vitesse d'un aéronef varient en sens opposé, en mettant les incidences élevées en bas et les incidences faibles en haut, on permet au pilote de retrouver le comportement d'échelle qu'il connaît, à savoir que, lorsqu'il accélère, la mesure de vitesse augmente, et inversement.

De plus, on choisit la taille de la visualisation de l'échelle 10 de manière à se rapprocher en terme de dynamique du comportement de la vitesse. On peut choisir, par exemple, que 1 cm correspond à 2° d'incidence.

Ainsi, la taille et le mode de variation (sens, vitesse) de l'affichage sont adaptés de manière à se rapprocher du comportement usuel d'un affichage de vitesse.

De plus, avantageusement, ladite échelle longitudinale 10 comporte des valeurs d'incidence particulières, correspondant respectivement à :
- une première limite de vol V1 ;
- une deuxième limite de vol V2 qui est supérieure à ladite première limite de vol V1 et qui définit avec cette dernière ledit domaine de vol autorisé DA ;
- une troisième limite de vol V3 qui est inférieure à ladite première limite de vol V1, qui définit avec cette dernière ledit premier domaine de vol déconseillé DD1, et qui définit ledit premier domaine de vol interdit DI1 pour la plage qui est inférieure à ladite troisième limite de vol V3 ; et
- une quatrième limite de vol V4 qui est supérieure à ladite deuxième limite de vol V2, qui définit avec cette dernière ledit second domaine de vol déconseillé DD2, et qui définit ledit second domaine de vol interdit DI2 pour la plage qui est supérieure à ladite quatrième limite de vol V4.

Par conséquent, pour définir l'une desdites échelles longitudinales, on détermine simplement lesdites première à quatrième limites de vol V1 à V4 correspondantes, qui sont caractéristiques d'une configuration aérodynamique (becs/volets) particulière de l'aéronef. Lesdites limites de vol V1 à V4 sont ensuite stockées dans ladite base de données 7.

Dans un mode de réalisation préféré :
- ladite première limite de vol V1 correspond à la vitesse de décrochage de l'aéronef augmentée d'une marge et représente la vitesse minimale sélectionnable au pilote automatique ;
- ladite deuxième limite de vol V2 correspond à la vitesse maximale que peut prendre l'aéronef avec tous ses volets déployés sans risque pour sa structure, augmentée d'une marge de charge normale ;
- ladite troisième limite de vol V3 correspond à la vitesse de décrochage de l'aéronef ; et
- ladite quatrième limite de vol V4 correspond à ladite vitesse maximale que peut prendre l'aéronef avec tous ses volets déployés sans risque pour sa structure, augmentée d'une marge de charge réduite.

Comme indiqué précédemment, lesdites limites de vol V1, V2, V3, V4 dépendent de la configuration aérodynamique de l'aéronef, c'est-à-dire de la position des volets et des becs sur les ailes de l'aéronef.

On sait que les limites de vol indiquées en terme d'angle d'incidence sont constantes pour une configuration aérodynamique donnée, quelle que soit la masse et l'altitude de l'aéronef. Par contre, les limites correspondantes indiquées en terme de vitesse dépendent de la configuration aérodynamique, mais aussi de la masse et de l'altitude de l'aéronef. Elles sont obtenues en entrant les limites d'angle d'incidence dans l'équation de sustentation de l'aéronef. Pour une configuration aérodynamique donnée, l'invention revient à choisir des valeurs limites prédéterminées en incidence permettant de garantir que, quelles que soient les conditions de vol de l'aéronef (masse, altitude) pour cette configuration aérodynamique donnée, les limites autorisées de vitesse ne seront pas franchies (Vdécrochage, Vmaxi opérationnelle, ...). Cela revient en pratique à choisir un domaine de vol de l'aéronef, plus restreint que le domaine de vol admissible, à l'intérieur duquel on est sûr que l'aéronef respecte ces limites.

De préférence, la transition entre deux zones successives Z1 à Z5 de l'échelle 10 est atténuée et filtrée par l'unité centrale 2.

A cet effet, l'incidence utilisée est filtrée de manière à rendre le comportement de l'échelle 10 plus proche d'une échelle de vitesse, en air calme comme en turbulence. En effet :
- en air calme, une action sur le manche de commande se traduit par une variation oscillatoire de l'incidence avant qu'elle ne se stabilise sur sa nouvelle valeur. La vitesse varie elle aussi, sans oscillations. Le but du filtrage est d'éviter les oscillations en incidence de sorte que l'échelle 10 se comporte comme une échelle de vitesse ; et
- en air turbulent, les sondes d'incidence sont filtrées pour éviter que l'échelle 10 vibre alors que la vitesse est stable.

Comme on peut le voir sur la figure 2 :
- les zones Z1 à Z5 de l'échelle longitudinale 10 sont différenciées les unes des autres (comme illustré par des hachures sur les zones intermédiaires Z2 et Z3), ceci de préférence à l'aide de couleurs différentes. Par exemple, la zone Z1 (domaine de vol autorisé DA) peut être en vert, les zones Z2 et Z3 (domaines de vol déconseillés DD1 et DD2) peuvent être en couleur ambre et les zones Z4 et Z5 (domaines de vol interdits DI1 et DI2) peuvent être en rouge ; et
- ledit signe caractéristique 15 est un trait, par exemple jaune, qui est orthogonal à la direction longitudinale de l'échelle mobile 10, qui est prévu sur ladite échelle mobile 10 et qui peut être muni d'un triangle à une extrémité.

Par ailleurs, pour bien mettre en évidence les domaines de vol interdits DI1 et DI2, on prévoit, sur l'échelle longitudinale 10, en plus de la couleur rouge :
- dans la zone Z4 relative audit premier domaine de vol interdit DI1, une première indication écrite 16 [par exemple "SLOW" qui signifie "lent" en anglais (la langue utilisée en aéronautique)], prévenant d'une vitesse faible de l'aéronef ; et
- dans la zone Z5 relative audit second domaine de vol interdit DI2, une seconde indication écrite 17 (par exemple "FAST" qui signifie "rapide"), prévenant d'une vitesse élevée de l'aéronef.

Par conséquent, le pilote doit maîtriser la vitesse de l'aéronef de sorte que le trait caractéristique 15 (correspondant à l'incidence actuelle α qui est représentative de la vitesse effective de l'aéronef) soit situé de préférence dans la zone Z1 (domaine de vol autorisé DA) de l'échelle 10, et éventuellement dans l'une des zones Z2 et Z3 (domaines de vol déconseillés DD1 et DD2) de cette échelle 10, sans toutefois atteindre l'une des zones Z4 et Z5 (domaines de vol interdits DI1 et DI2).

En outre, selon l'invention, lesdits moyens d'affichage 3 présentent ladite échelle 10 et ledit signe caractéristique 15 sur l'écran de visualisation 4, uniquement lorsqu'un afficheur principal est défaillant.

Pour ce faire, l'indicateur de pilotage 1 conforme à l'invention comporte de plus un moyen de détection 18 qui est relié par une liaison 19 à l'unité centrale 2 et qui est susceptible de détecter la défaillance d'un indicateur principal non représenté sur la figure 1, et lesdits moyens d'affichage 3 sont commandés par l'unité centrale 2 de manière à présenter ladite échelle 10 et ledit signe caractéristique 15 sur l'écran de visualisation 4, uniquement lorsque la défaillance dudit indicateur principal est détectée par ledit moyen de détection 18.

A cet effet, dans un mode de réalisation particulier :
- ledit moyen de détection 18 surveille en permanence au moins un capteur de pression usuel (non représenté) de l'aéronef, dont les mesures sont utilisées par ledit afficheur principal 22 (figure 3) ; et
- lorsque ledit moyen de détection 18 détecte une panne dudit capteur de pression, ce moyen de détection 18 ou l'unité centrale 2 en déduit que ledit afficheur principal 22 est défaillant.

Ainsi, grâce à l'invention, on est toujours en mesure d'afficher des informations illustrant des marges de vitesse, et ceci même en cas de panne de l'afficheur principal usuel 22, ce qui apporte une sécurité de vol accrue.

Par ailleurs, de préférence, lesdits moyens d'affichage 3 présentent ladite échelle 10 et ledit signe caractéristique 15 sur l'écran de visualisation 4, uniquement lorsque l'aéronef est en vol.

Dans un mode de réalisation particulier représenté sur la figure 3, l'indicateur de pilotage 1 conforme à l'invention et comportant l'ensemble 21 de moyens 2, 5, 6 et 18 de la figure 1, ainsi que les moyens d'affichage 3, fait partie d'un dispositif d'indication 20 qui comporte également un indicateur principal 22 usuel.

Cet indicateur principal 22 est destiné à présenter, de préférence en permanence, les marges de vitesse de l'aéronef, soit sur un écran de visualisation spécifique non représenté, soit sur l'écran de visualisation 4 des moyens d'affichage 3 par l'intermédiaire d'une liaison 23 représentée en traits interrompus. Dans ce cas, de préférence, l'indicateur de pilotage 1 conforme à l'invention est un indicateur auxiliaire qui présente les informations précitées illustrant des marges de vitesse uniquement lorsque le moyen de détection 18 a détecté une défaillance dudit indicateur principal 22.

## Revendications

1. Procédé pour afficher des informations illustrant des marges de vitesse sur un aéronef, procédé selon lequel :
a) on détermine l'incidence actuelle de l'aéronef ;
b) on définit une échelle longitudinale (10) qui dépend de la configuration aérodynamique actuelle de l'aéronef et qui comporte plusieurs zones différenciées (Z1 à Z5) exprimées en angles d'incidence et correspondant respectivement à un domaine de vol autorisé (DA), des premier et second domaines de vol déconseillés (DD1, DD2) et des premier et second domaines de vol interdits (DI1, DI2), ladite échelle longitudinale (10) comportant des valeurs d'incidence particulières, correspondant respectivement à :
- une première limite de vol (V1) qui correspond à la vitesse de décrochage de l'aéronef augmentée d'une marge et représente la vitesse minimale sélectionnable au pilote automatique ;
- une deuxième limite de vol (V2) qui est supérieure à ladite première limite de vol (V1) et qui définit avec cette dernière ledit domaine de vol autorisé (DA), ladite deuxième limite de vol (V2) correspondant à la vitesse maximale que peut prendre l'aéronef avec tous ses volets déployés sans risque pour sa structure, augmentée d'une marge de charge normale ;
- une troisième limite de vol (V3) qui est inférieure à ladite première limite de vol (V1), qui définit avec cette dernière ledit premier domaine de vol déconseillé (DD1), et qui définit ledit premier domaine de vol interdit (DI1) pour la plage qui est inférieure à ladite troisième limite de vol (V3), ladite troisième limite de vol (V3) correspondant à la vitesse de décrochage de l'aéronef ; et
- une quatrième limite de vol (V4) qui est supérieure à ladite deuxième limite de vol (V2), qui définit avec cette dernière ledit second domaine de vol déconseillé (DD2), et qui définit ledit second domaine de vol interdit (DI2) pour la plage qui est supérieure à ladite quatrième limite de vol (V4), ladite quatrième limite de vol (V4) correspondant à ladite vitesse maximale que peut prendre l'aéronef avec tous ses volets déployés sans risque pour sa structure, augmentée d'une marge de charge réduite ; et
c) on présente sur un écran de visualisation (4) ladite échelle longitudinale (10) qui est mobile longitudinalement, en étant susceptible de défiler sur ledit écran de visualisation (4), et dont la position sur ledit écran de visualisation (4) est définie en fonction de l'incidence actuelle de l'aéronef, qui est illustrée par un signe caractéristique (15) qui est fixe sur ledit écran de visualisation (4) au niveau de ladite échelle longitudinale (10), ladite échelle longitudinale mobile (10) défilant par rapport audit signe caractéristique (15) en fonction de l'incidence actuelle de l'aéronef.

2. Procédé selon la revendication 1,
**caractérisé en ce que**, dans une étape préliminaire, on définit une pluralité d'échelles longitudinales représentatives, respectivement, de différentes configurations aérodynamiques de l'aéronef, et **en ce qu'**à l'étape b) :
- on détermine la configuration aérodynamique actuelle de l'aéronef ; et
- on sélectionne, parmi ladite pluralité d'échelles longitudinales, celle qui est représentative de ladite configuration aérodynamique actuelle de l'aéronef.

3. Procédé selon l'une des revendications 1 et 2,
**caractérisé en ce que** l'on présente ladite échelle longitudinale (10) verticalement sur ledit écran de visualisation (4), et **en ce qu'**elle est formée de manière à comporter les valeurs d'angle d'incidence élevées vers le bas et les valeurs d'angles d'incidence faibles vers le haut.

4. Procédé selon l'une quelconque des revendications précédentes,
**caractérisé en ce qu'**à l'étape a) on filtre l'incidence actuelle, au moins lorsque l'air extérieur est calme ou lorsque l'air extérieur est turbulent.

5. Procédé selon l'une quelconque des revendications précédentes,
**caractérisé en ce que** l'on présente ladite échelle (10) et ledit signe caractéristique (15) sur l'écran de visualisation (4), uniquement lorsqu'un afficheur principal (22) est défaillant.

6. Procédé selon la revendication 5,
**caractérisé en ce que** :
α) on surveille en permanence au moins un capteur de pression de l'aéronef, dont les mesures sont utilisées par ledit afficheur principal (22) ; et
β) lorsque l'on détecte une panne dudit capteur de pression, on en déduit que ledit afficheur principal (22) est défaillant.

7. Procédé selon l'une quelconque des revendications précédentes,
**caractérisé en ce que** l'on présente ladite échelle (10) et ledit signe caractéristique (15) sur l'écran de visualisation (4), uniquement lorsque l'aéronef est en vol.

8. Procédé selon l'une quelconque des revendications précédentes,
**caractérisé en ce que** lesdites zones (Z1 à Z5) de l'échelle longitudinale (10) sont différenciées à l'aide de couleurs différentes.

9. Procédé selon l'une quelconque des revendications précédentes,
**caractérisé en ce que** ledit signe caractéristique (15) est un trait qui est orthogonal à la direction longitudinale de l'échelle (10) et qui est prévu sur ladite échelle (10).

10. Procédé selon l'une quelconque des revendications précédentes,
**caractérisé en ce que** l'on prévoit, sur l'échelle longitudinale (10) :
- dans la zone (Z4) relative audit premier domaine de vol interdit (DI1), une première indication écrite (16) prévenant d'une vitesse faible de l'aéronef ; et
- dans la zone (Z5) relative audit second domaine de vol interdit (DI2), une seconde indication écrite (17) prévenant d'une vitesse élevée de l'aéronef.

11. Indicateur de pilotage pour aéronef, destiné à fournir des informations illustrant des marges de vitesse, ledit indicateur de pilotage (1) comportant :
- un premier moyen (5) pour déterminer l'incidence actuelle de l'aéronef ;
- au moins une base de données (7) qui comprend une pluralité d'échelles longitudinales (10) qui dépendent de la configuration aérodynamique de l'aéronef et qui comportent plusieurs zones différenciées (Z1 à Z5) exprimées en angles d'incidence et correspondant respectivement à un domaine de vol autorisé (DA), des premier et second domaines de vol déconseillés (DD1, DD2) et des premier et second domaines de vol interdits (DI1, DI2), chacune desdites échelles longitudinales (10) comportant des valeurs d'incidence particulières, correspondant respectivement à :
. une première limite de vol (V1) qui correspond à la vitesse de décrochage de l'aéronef augmentée d'une marge et représente la vitesse minimale sélectionnable au pilote automatique ;
. une deuxième limite de vol (V2) qui est supérieure à ladite première limite de vol (V1) et qui définit avec cette dernière ledit domaine de vol autorisé (DA), ladite deuxième limite de vol (V2) correspondant à la vitesse maximale que peut prendre l'aéronef avec tous ses volets déployés sans risque pour sa structure, augmentée d'une marge de charge normale;
. une troisième limite de vol (V3) qui est inférieure à ladite première limite de vol (V1), qui définit avec cette dernière ledit premier domaine de vol déconseillé (DD1), et qui définit ledit premier domaine de vol interdit (DI1) pour la plage qui est inférieure à ladite troisième limite de vol (V3), ladite troisième limite de vol (V3) correspondant à la vitesse de décrochage de l'aéronef ; et
. une quatrième limite de vol (V4) qui est supérieure à ladite deuxième limite de vol (V2), qui définit avec cette dernière ledit second domaine de vol déconseillé (DD2), et qui définit ledit second domaine de vol interdit (D12) pour la plage qui est supérieure à ladite quatrième limite de vol (V4), ladite quatrième limite de vol (V4) correspondant à ladite vitesse maximale que peut prendre l'aéronef avec tous ses volets déployés sans risque pour sa structure, augmentée d'une marge de charge réduite ;
- une unité centrale (2) qui sélectionne, parmi ladite pluralité d'échelles longitudinales (10), celle qui est représentative de la configuration aérodynamique actuelle de l'aéronef ; et
- des moyens d'affichage (3) qui présentent sur un écran de visualisation (4) ladite échelle longitudinale (10) sélectionnée, qui est mobile longitudinalement en étant susceptible de défiler sur ledit écran de visualisation (4), et dont la position sur ledit écran de visualisation (4) est définie en fonction de l'incidence actuelle de l'aéronef, qui est illustrée par un signe caractéristique (15) qui est fixe sur ledit écran de visualisation (4) au niveau de ladite échelle longitudinale (10), ladite échelle longitudinale mobile (10) défilant par rapport audit signe caractéristique (15) en fonction de l'incidence actuelle de l'aéronef.

12. Indicateur de pilotage selon la revendication 11,
**caractérisé en ce qu'**il comporte, de plus, un second moyen (6) pour déterminer la configuration aérodynamique actuelle de l'aéronef.

13. Indicateur de pilotage selon l'une des revendications 11 et 12,
**caractérisé en ce que** ladite unité centrale (2) filtre l'incidence actuelle déterminée par ledit premier moyen (5), au moins lorsque l'air extérieur est calme ou turbulent.

14. Indicateur de pilotage selon l'une des revendications 11 à 12,
**caractérisé en ce qu'**il comporte, de plus, un moyen de détection (18) qui est susceptible de détecter la défaillance d'un indicateur principal (22), et **en ce que** lesdits moyens d'affichage (3) présentent ladite échelle (10) et ledit signe caractéristique (15) sur l'écran de visualisation (4), uniquement lorsque la défaillance dudit indicateur principal (22) est détectée par ledit moyen de détection (18).

15. Dispositif d'indication destiné à fournir des informations de marges de vitesse, ledit dispositif d'indication (20) comportant un indicateur principal (22) susceptible de présenter des marges de vitesse sur un écran de visualisation (4),
**caractérisé en ce qu'**il comporte, de plus, un indicateur auxiliaire (1) destiné à présenter des informations de marges de vitesse sur un écran de visualisation (4), lorsque ledit indicateur principal (22) est défaillant, et **en ce que** ledit indicateur auxiliaire (1) correspond à l'indicateur de pilotage selon l'une quelconque des revendications 11 et 14.

## Claims

1. A method for displaying information showing the airspeed tolerance margins for an aircraft according to which:
a) the current angle of attack of the aircraft is determined;
b) a longitudinal scale (10) is defined which is a function of the aircraft's current aerodynamic configuration and which is composed of several differentiated zones (Z1 to Z5) expressed in angles of attack and corresponding, respectively, to an allowed range of flight (DA), to first and second unrecommended ranges of flight (DD1, DD2) and to first and second prohibited ranges of flight (DI1,DI2), said longitudinal scale (10) comprising particular values of angle of attack corresponding respectively to:
- a first flight limit (V1) which corresponds to the aircraft's stall airspeed augmented by a safety margin and which represents the minimum airspeed that can be set by the autopilot;
- a second flight limit (V2) being higher than said first flight limit (V1) which, together with the latter, defines said allowed range of flight (DA) said second flight limit (V2) corresponding to the maximum speed that the aircraft can assume with all its flaps deployed and without risk to its structural integrity, augmented by a normal loading margin;
- a third flight limit (V3) being lower than said first flight limit (V1) which, together with the latter, defines said first unrecommended range of flight (DD1), and which defines said first prohibited range of flight (DI1) being any value below said third flight limit (V3), said third flight limit (V3) corresponding to the aircraft's stall airspeed; and
- a fourth flight limit (V4) being higher than said second flight limit (V2) which, together with the latter, defines said second unrecommended range of flight (DD2), and which defines said second prohibited range of flight (DI2) being any value exceeding said fourth flight limit (V4), said fourth flight limit (V4) corresponding to the maximum speed that the aircraft can assume with all its flaps deployed and without risk to its structural integrity, augmented by a reduced loading margin; and
c) said longitudinal scale (10) is presented on a display screen (4) and, being mobile in the longitudinal direction, is able to scroll up and down said display screen (4), and whose position on said display screen (4) depends on the current angle of attack of the aircraft, which is indicated by a characteristic marker (15) in a fixed position on said display screen (4) across said longitudinal scale (10), said mobile longitudinal scale (10) scrolling up and down relative to said characteristic marker (15) as a function of the current angle of attack of the aircraft.

2. The method as claimed in claim 1,
wherein, as a preliminary step, a plurality of longitudinal scales are defined which are respectively representative of different aerodynamic configurations of the aircraft, and wherein at step b):
- the current aerodynamic configuration of the aircraft is determined; and
- the longitudinal scale representative of said current aerodynamic configuration of the aircraft is selected from said plurality of longitudinal scales.

3. The method as claimed in any one of claims 1 and 2,
wherein said longitudinal scale (10) is displayed vertically on said display screen (4), and wherein it is presented with the high angle of attack values toward the bottom and the lower angle of attack values toward the top.

4. The method as claimed in any one of the preceding claims,
wherein, at step a), the current angle of attack value is filtered, at least when the outside air is calm or when the outside air is turbulent.

5. The method as claimed in any one of the preceding claims,
wherein said scale (10) and said characteristic marker (15) are presented on the display screen (4) only when a main display (22) is defective.

6. The method as claimed in claim 5,
wherein:
α) at least one of the aircraft's pressure sensors whose measurements are used by said main display (22) is continuously monitored; and
β) when a fault is detected in said pressure sensor, it is accordingly deduced that said main display (22) is defective.

7. The method as claimed in any one of the preceding claims,
wherein said scale (10) and said characteristic marker (15) are presented on the display screen (4) only while the aircraft is in flight.

8. The method as claimed in any one of the preceding claims,
wherein said zones (Z1 to Z5) of the longitudinal scale (10) are differentiated from each other using different colors.

9. The method as claimed in any one of the preceding claims,
wherein said characteristic marker (15) is a line drawn across said scale (10) and is orthogonal to the longitudinal direction of the scale (10).

10. The method as claimed in any one of the preceding claims,
wherein, on the longitudinal scale (10), is provided:
- a first written indication (16) warning of a low airspeed of the aircraft in the zone (Z4) relating to said first prohibited range of flight (DI1); and
- a second written indication (17) warning of a high airspeed of the aircraft in the zone (Z5) relating to said second prohibited range of flight (DI2).

11. An aircraft flight indicator designed to provide information showing the airspeed tolerance margins, said flight indicator (1) comprising:
- a first means (5) of determining the current angle of attack of the aircraft;
- at least one database (7) containing a plurality of longitudinal scales (10) which depend on the aircraft's aerodynamic configuration and which are composed of several differentiated zones (Z1 to Z5) expressed as angles of attack and corresponding, respectively, to one allowed range of flight (DA), to first and second unrecommended ranges of flight (DD1, DD2) and to first and second prohibited ranges of flight (DI1, DI2), each of said longitudinal scales (10) comprising particular values of angle of attack corresponding respectively to:
- a first flight limit (V1) which corresponds to the aircraft's stall airspeed augmented by a safety margin and which represents the minimum airspeed that can be set by the autopilot;
- a second flight limit (V2) being higher than said first flight limit (V1) which, together with the latter, defines said allowed range of flight (DA), said second flight limit (V2) corresponding to the maximum speed that the aircraft can assume with all its flaps deployed and without risk to its structural integrity, augmented by a normal loading margin;
- a third flight limit (V3) being lower than said first flight limit (V1) which, together with the latter, defines said first unrecommended range of flight (DD1), and which defines said first prohibited range of flight (DI1) being any value below said third flight limit (V3), said third flight limit (V3) corresponding to the aircraft's stall airspeed; and
- a fourth flight limit (V4) being higher than said second flight limit (V2) which, together with the latter, defines said second unrecommended range of flight (DD2), and which defines said second prohibited range of flight (DI2) being any value exceeding said fourth flight limit (V4), said fourth flight limit (V4) corresponding to the maximum speed that the aircraft can assume with all its flaps deployed and without risk to its structural integrity, augmented by a reduced loading margin;
- a central processing unit (2) which selects, from said plurality of longitudinal scales (10), the longitudinal scale representative of the current aerodynamic configuration of the aircraft; and
- a display means (3) which presents on a display screen (4) said selected longitudinal scale (10) which, being mobile in the longitudinal direction, is able to scroll up and down said display screen (4), and whose position on said display screen (4) depends on the current angle of attack of the aircraft, which is indicated by a characteristic marker (15) in a fixed position on said display screen (4) across said longitudinal scale, said mobile longitudinal scale (10) scrolling up and down relative to said characteristic marker (15) as a function of the current angle of attack of the aircraft.

12. The flight indicator as claimed in claim 11,
wherein it additionally comprises a second means (6) for determining the current aerodynamic configuration of the aircraft.

13. The flight indicator as claimed in any one claims 11 and 12,
wherein said central processing unit (2) filters the current angle of attack value as determined by said first means (5), at least when the outside air is calm or turbulent.

14. The flight indicator as claimed in any one of claims 11 and 12,
wherein it additionally comprises a detection means (18) capable of detecting a failure of a main indicator (22), and wherein said display means (3) present said scale (10) and said characteristic marker (15) on the display screen (4) only when the failure of said main indicator (22) is detected by said detection means (18).

15. An indication device designed to provide information on the airspeed tolerance margins, said indication device (20) comprising a main indicator (22) capable of presenting the airspeed tolerance margins on a display screen (4),
wherein it additionally comprises an auxiliary indicator (1) designed to present information on the airspeed tolerance margins on a display screen (4) when said main indicator (22) is defective, and wherein said auxiliary indicator (1) corresponds to the flight indicator as claimed in any one of claims 11 to 14.

## Patentansprüche

1. Verfahren zum Anzeigen von Informationen, welche Geschwindigkeitsspielräume in einem Flugzeug darstellen, gemäß welchen:
a) der aktuelle Anstellwinkel des Flugzeugs bestimmt wird;
b) eine Längseinteilung (10) definiert wird, die von der aktuellen aerodynamischen Konfiguration des Flugzeugs abhängig ist und die mehrere differenzierte Zonen (Z1 bis Z5) umfasst, welche für Anstellwinkel stehen und jeweils einem zulässigen Flugbereich (DA), einem ersten und einem zweiten unerwünschten Flugbereich (DD1, DD2) und einem ersten und einem zweiten untersagten Flugbereich (DI1, DI2) entsprechen, wobei die Längseinteilung (10) spezielle Werte für Anstellwinkel umfasst, und zwar entsprechend jeweils:
• einem ersten Flug-Grenzwert (V1), welcher der kritischen Geschwindigkeit des Flugzeugs, erweitert um einen Spielraum, entspricht und die am Autopilot auswählbare Minimalgeschwindigkeit darstellt;
• einem zweiten Flug-Grenzwert (V2), der größer als der erste Flug-Grenzwert (V1) ist und der mit diesem letzten den zulässigen Flugbereich (DA) definiert, wobei der zweite Flug-Grenzwert (V2) der Maximalgeschwindigkeit entspricht, erweitert um einen Spielraum bei normaler Last, die das Flugzeug ohne Gefahr für seinen inneren Aufbau annehmen kann, wenn alle seine Flügelklappen ausgefahren sind;
• einem dritten Flug-Grenzwert (V3), der kleiner als der erste Flug-Grenzwert (V1) ist, der mit diesem letzten den unerwünschten ersten Flug-Bereich (DD1) definiert und der den untersagten ersten Flug-Bereich (DI1) für den Wertebereich definiert, der kleiner als der dritte Flug-Grenzwert (V3) ist, wobei der dritte Flug-Grenzwert (V3) der kritischen Geschwindigkeit des Flugzeugs entspricht; und
• einem vierten Flug-Grenzwert (V4), der größer als der zweite Flug-Grenzwert (V2) ist, der mit diesem letzten den zweiten unerwünschten Flug-Bereich (DD2) definiert und der den zweiten untersagten Flug-Bereich (D12) für den Wertebereich definiert, der größer als der vierte Flug-Grenzwert (V4) ist, wobei der vierte Flug-Grenzwert (V4) der Maximalgeschwindigkeit entspricht, erweitert um einen Spielraum bei reduzierter Last, die das Flugzeug ohne Gefahr für seinen inneren Aufbau einnehmen kann, wenn alle Flügelklappen ausgefahren sind; und
c) auf einem Sichtschirm (4) die Längseinteilung (10) dargestellt wird, die in Längsrichtung beweglich ist, so dass sie in der Lage ist, auf dem Sichtschirm (4) zu laufen, und deren Position auf dem Sichtschirm (4) in Abhängigkeit von dem aktuellen Anstellwinkel des Flugzeugs definiert wird, der durch ein Kennzeichen (15) dargestellt ist, dass auf dem Sichtschirm (4) an der Längseinteilung (10) festgelegt ist, wobei die bewegliche Längseinteilung (10) an dem Kennzeichen (15) in Abhängigkeit von dem aktuellen Anstellwinkel des Flugzeugs vorbei läuft.

2. Verfahren nach Anspruch 1,
**dadurch gekennzeichnet, dass** in einem ersten Schritt eine Mehrzahl von repräsentativen Längseinteilungen definiert wird, die für jeweils unterschiedliche aerodynamische Konfigurationen des Flugzeugs repräsentativ sind, und dass am Schritt b):
• die aktuelle aerodynamische Konfiguration des Flugzeugs bestimmt wird; und
• aus der Mehrzahl von Längseinteilungen diejenige ausgewählt wird, die der aktuellen aerodynamischen Konfiguration des Flugzeugs repräsentativ ist.

3. Verfahren nach einem der Ansprüche 1 und 2,
**dadurch gekennzeichnet, dass** die Längseinteilung (10) auf dem Sichtschirm (4) vertikal dargestellt wird, und dass diese in der Weise gebildet wird, dass sie hohe Werte für den Anstellwinkel in Richtung nach unten und niedrige Werte für den Anstellwinkel in Richtung nach oben umfasst.

4. Verfahren nach einem der vorstehenden Ansprüche,
**dadurch gekennzeichnet, dass** am Schritt a) der aktuelle Anstellwinkel gefiltert wird, wenigstens dann, wenn die Außenluft ruhig ist oder wenn die Außenluft turbulent ist.

5. Verfahren nach einem der vorstehenden Ansprüche,
**dadurch gekennzeichnet, dass** die Einteilung (10) und das Kennzeichen (15) auf dem Sichtschirm (4) nur dann dargestellt werden, wenn eine Hauptanzeige (22) versagt.

6. Verfahren nach Anspruch 5,
**dadurch gekennzeichnet, dass**:
α) permanent wenigstens ein Druckfühler des Flugzeugs überwacht wird, dessen Messungen von der Hauptanzeige (22) genutzt wird; und
β) wenn ein Fehler des Druckfühlers erfasst wird, daraus abgeleitet wird, dass die Hauptanzeige (22) versagt.

7. Verfahren nach einem der vorstehenden Ansprüche,
**dadurch gekennzeichnet, dass** die Einteilung (10) und das Kennzeichen (15) auf dem Sichtschirm (4) nur dann dargestellt werden, wenn sich das Flugzeug im Flug befindet.

8. Verfahren nach einem der vorstehenden Ansprüche,
**dadurch gekennzeichnet, dass** die Zonen (Z1 bis Z5) der Längseinteilung (10) mit Hilfe von unterschiedlichen Farben differenziert werden.

9. Verfahren nach einem der vorstehenden Ansprüche,
**dadurch gekennzeichnet, dass** das Kennzeichen (15) ein Strich ist, der senkrecht zur Längsrichtung der Einteilung (10) verläuft und der auf der Einteilung (10) vorgesehen ist.

10. Verfahren nach einem der vorstehenden Ansprüche,
**dadurch gekennzeichnet, dass** auf der Längseinteilung (10) vorgesehen wird:
• in der Zone (Z4) in Bezug zu dem ersten untersagten Flug-Bereich (DI1), ein erster Schrifthinweis (16), der über eine geringe Geschwindigkeit des Flugzeugs informiert; und
• in der Zone (Z5) in Bezug zu dem zweiten untersagten Flug-Bereich (DI2) ein zweiter Schritthinweis (17), der über eine hohe Geschwindigkeit des Flugzeugs informiert.

11. Steuer-Anzeigeinstrument für ein Flugzeug, dazu bestimmt, Informationen zu liefern, die Geschwindigkeitsspielräume darstellen, wobei das Steuerungs-Anzeigeinstrument (1) umfasst:
• ein erstes Mittel (5), um den tatsächlichen Anstellwinkel des Flugzeugs zu bestimmen;
• wenigstens eine Datenbank (7), die eine Mehrzahl von Längseinteilungen (10) umfasst, welche abhängig sind von der aerodynamischen Konfiguration des Flugzeugs, und die mehrere differenzierte Zonen (Z1 bis Z5) umfasst, welche Anstellwinkel ausdrücken und jeweils einem zulässigen Flugbereich (DA), einem ersten und einem zweiten unerwünschten Flugbereich (DD1, DD2) und einem ersten und einem zweiten untersagten Flugbereich (DI1, DI2) entsprechen, wobei jede der Längseinteilungen (10) spezielle Werte von Anstellwinkeln umfassen, entsprechend jeweils:
• einem ersten Flug-Grenzwert (V1), welcher der kritischen Geschwindigkeit des Flugzeugs entspricht, erweitert um einen Spielraum, und die am Autopilot auswählbare Minimalgeschwindigkeit darstellt;
• einem zweiten Flug-Grenzwert (V2), der größer als der erste Flug-Grenzwert (V1) ist und der mit diesem letzten den zulässigen Flugbereich (DA) definiert, wobei der zweite Flug-Grenzwert (V2) der Maximalgeschwindigkeit entspricht, erweitert um einen Spielraum bei normaler Last, die das Flugzeug ohne Gefahr für seinen inneren Aufbau annehmen kann, wenn alle seine Flügelklappen ausgefahren sind;
• einem dritten Flug-Grenzwert (V3), der kleiner als der erste Flug-Grenzwert (V1) ist, der mit diesem letzten den unerwünschten ersten Flug-Bereich (DD1) definiert und der den untersagten ersten Flug-Bereich (DI1) für den Wertebereich definiert, der kleiner als der dritte Flug-Grenzwert (V3) ist, wobei der dritte Flug-Grenzwert (V3) der kritischen Geschwindigkeit des Flugzeugs entspricht; und
• einem vierten Flug-Grenzwert (V4), der größer als der zweite Flug-Grenzwert (V2) ist, der mit diesem letzten den zweiten unerwünschten Flug-Bereich (DD2) definiert und der den zweiten untersagten Flug-Bereich (DI2) für den Wertebereich definiert, der größer als der vierte Flug-Grenzwert (V4) ist, wobei der vierte Flug-Grenzwert (V4) der Maximalgeschwindigkeit entspricht, erweitert um einen Spielraum bei reduzierter Last, die das Flugzeug ohne Gefahr für seinen inneren Aufbau einnehmen kann, wenn alle Flügelklappen ausgefahren sind;
• eine Zentraleinheit (2), die aus der Mehrzahl von Längsreinteilungen (10) diejenige auswählt, die für die aktuelle aerodynamische Konfiguration des Flugzeugs repräsentativ ist; und
• Anzeigemittel (3), die auf einem Sichtschirm (4), die ausgewählten Längseinteilungen (10) darstellen, welche in Längsrichtung beweglich ist und **dadurch** in der Lage ist, auf dem Sichtschirm (4) zu laufen, und deren Position auf dem Sichtschirm (4) in Abhängigkeit von dem aktuellen Anstellwinkel des Flugzeugs definiert ist, der durch ein Kennzeichen (15) dargestellt ist, der auf dem Sichtschirm (4) an der Längseinteilung (10) festgelegt ist, wobei die bewegliche Längseinteilung (10) an dem Kennzeichen (15) in Abhängigkeit von dem aktuellen Anstellwinkel des Flugzeugs vorbei läuft.

12. Steuerungs-Anzeigeinstrument nach Anspruch 11,
**dadurch gekennzeichnet, dass** dieses ferner ein zweites Mittel (6) umfasst, um die aktuelle aerodynamische Konfiguration des Flugzeugs zu erfassen.

13. Steuerungs- Anzeigeinstrument nach einem der Ansprüche 11 und 12,
**dadurch gekennzeichnet, dass** die Zentraleinheit (2) den durch das erste Mittel (5) bestimmten aktuellen Anstellwinkel wenigstens dann filtert, wenn die Außenluft ruhig oder turbulent ist.

14. Steuerungs-Anzeigeinstrument nach einem der Ansprüche 11 bis 12,
**dadurch gekennzeichnet, dass** dieses ferner ein Erfassungsmittel (18) umfasst, das in der Lage ist, das Versagen einer Hauptanzeige (22) zu erfassen, und **dadurch**, dass die Anzeigemittel (3) die Einteilung (10) und das Kennzeichen (15) auf dem Sichtschirm (4) nur dann darstellen, wenn das Versagen der Hauptanzeige (22) von dem Erfassungsmittel (18) erfasst wird.

15. Anzeigevorrichtung zum Liefern von Informationen über Geschwindigkeitsspielräume, wobei die Anzeigevorrichtung (20) eine Hauptanzeige (22) umfasst, die in der Lage ist, Geschwindigkeitsspielräume auf einem Sichtschirm (4) darstellen,
**dadurch gekennzeichnet, dass** diese ferner eine Hilfsanzeige (1) umfasst, die dazu bestimmt ist, Informationen über Geschwindigkeitsspielräume auf einem Sichtschirm (4) darzustellen, wenn die Hauptanzeige (22) versagt, und **dadurch**, dass die Hilfsanzeige (1) einem Steuerungs-Anzeigeinstrument gemäß einem der Ansprüche 11 und 14 entspricht.
